# EUROPÄISCHE PATENTSCHRIFT

(11) **EP 3 165 409 B1**
(45) Veröffentlichungstag und Bekanntmachung des Hinweises auf die Patenterteilung: **12.12.2018**
(21) Anmeldenummer: 16196260.0
(22) Anmeldetag: 28.10.2016
(51) Int. Cl.: B60R 21/213

(54) **VORHANGAIRBAG-EINHEIT UND FAHRZEUG MIT EINER DERARTIGEN VORHANGAIRBAG-EINHEIT**
AIRBAG CURTAIN UNIT AND VEHICLE COMPRISING SUCH AIRBAG CURTAIN UNIT
ENSEMBLE AIRBAG RIDEAU ET VÉHICULE COMPRENANT UN TEL ENSEMBLE AIRBAG RIDEAU

(30) Priorität: 05.11.2015 DE 202015007641 U
(43) Veröffentlichungstag der Anmeldung: 10.05.2017
(73) Patentinhaber: Dalphi Metal España, S.A., 36213 Vigo (ES)
(72) Erfinder: SANTÍN NAVARRO, Pedro José, 36204 Vigo (ES)
(74) Vertreter: ZF TRW Patentabteilung

(56) Entgegenhaltungen:
- WO-A1-99/42333
- US-A- 3 753 576
- US-B1- 6 241 278

## Beschreibung

Die Erfindung betrifft eine Vorhangairbag-Einheit mit einem aufblasbaren Gassack mit einer Gassack-Längsebene sowie mit einem Gasgenerator mit einer Gasgenerator-Längsachse und einem Gehäuse-Endabschnitt, der mindestens eine Gasauslassöffnung aufweist, gemäß dem Patentanspruch 1. Ferner betrifft die Erfindung ein Fahrzeug mit einer derartigen Vorhangairbag-Einheit.

Vorhangairbags, d.h. Seitenairbags, die mindestens eine Seitenscheibe, vorzugsweise alle Seitenscheiben, eines Fahrzeugs im aktivierten Zustand des Airbags abdecken, weisen ein derart großes Volumen auf, dass zugehörige Gasgeneratoren äußerst große Abmessungen aufweisen. Vorhangairbags umfassen einen Gassack sowie einen Gasgenerator, wobei dieser mit dem Gassack verbunden ist und standardmäßig parallel zur Fahrzeuglängsachse im Fahrzeug verbaut ist. Bezüglich des Aufblasverhaltens des Gassacks ist die Einbausituation bezüglich des Gasgenerators nicht optimal, da das aus dem Gasgenerator ausströmende Gas mehrmals umgelenkt werden muss, um den Gassack vollständig zu befüllen. Dies führt zu relativ langen Aufblaszeiten.

Aus der EP 1 753 643 B1 ist eine Fahrzeugsitz-Einheit bekannt, wobei ein länglicher Gasgenerator derart in einem Fahrzeugsitz eingebaut ist, dass die Längserstreckung des Gasgenerators parallel zur Vorder- und Rückseite des Fahrzeugsitzes verläuft. Allerdings ist es in diesem Zusammenhang notwendig, den Gasgenerator mit einer Hülse zu versehen, so dass der Gasgenerator stabilisiert eingebaut werden kann und das aus dem Gasgenerator austretende Gas in Richtung des Gassacks umgelenkt werden kann.

Die WO 99/42333 A offenbart einen Vorhangairbag-Einheit mit einem Airbag, der sich in Längsrichtung von der A-Säule eines Fahrzeugs bis hin zu einer C-Säule und im aufgeblasenen Zustand vom Dachrahmen bis wenigstens zu einer Unterkante der Seitenfenster erstreckt, einem flexiblen Schlauch, der im Inneren des Airbags angeordnet ist und zur Gasverteilung im Airbag eine Vielzahl von Öffnungen aufweist, sowie einem Gasgenerator, der zum Aufblasen des Airbags mit dem flexiblen Schlauch in Verbindung steht. Dabei ist der Gasgenerator zum Beispiel im Bereich der C-Säule oder an der B-Säule des Fahrzeugs befestigt.

In der US 6,241,278 B1 ist ein Vorhangairbag gemäß dem Oberbegriff des Anspruchs 1 beschrieben, der im gefalteten Zustand am seitlichen Dachrahmen befestigt ist, sich in Fahrzeuglängsrichtung erstreckt sowie über einen starren Rohrbogen mit einem Gasgenerator in Strömungsverbindung steht. Der Gasgenerator erstreckt sich dabei in Fahrzeugquerrichtung und ist durch ein verformbares Halteblech am vorderen Querträger des Fahrzeugdachs befestigt.

Die Aufgabe der Erfindung besteht darin, eine Vorhangairbag-Einheit anzugeben, die einen derartigen Aufbau aufweist, so dass das Aufblasverhalten des zur Vorhangairbag-Einheit zugehörigen Gassacks verbessert und die Aufblaszeit verkürzt wird.

Eine weitere Aufgabe der Erfindung besteht darin, ein Fahrzeug mit einer derartigen Vorhangairbag-Einheit anzugeben.

Diese Aufgabe wird im Hinblick auf die Vorhangairbag-Einheit durch den Gegenstand des Patentanspruchs 1 und im Hinblick auf das Fahrzeug durch den Gegenstand des Patentanspruchs 11 gelöst.

So beruht die Erfindung auf dem Gedanken, eine Vorhangairbag-Einheit anzugeben, die einen aufblasbaren Gassack mit einer Gassack-Längsebene aufweist und einen Gasgenerator mit einer Gasgenerator-Längsachse und einem Gehäuse-Endabschnitt, der mindestens eine Gasauslassöffnung aufweist, umfasst. Die erfindungsgemäße Vorhangairbag-Einheit umfasst demnach einen Gassack sowie einen Gasgenerator.

Erfindungsgemäß ist der Gasgenerator derart in Relation zum Gassack angeordnet, dass die Gasgenerator-Längsachse und die Gassack-Längsebene im Wesentlichen senkrecht zueinander verlaufen, und im aktivierten Zustand der Vorhangairbag-Einheit erzeugtes Gas aus der mindestens einen Gasauslassöffnung vom Gasgenerator unmittelbar in den Gassack strömt. Der Gasgenerator ist demnach nicht wie in standardmäßigen Vorhangairbag-Einheiten parallel zum Gassack angeordnet, sondern senkrecht dazu.

Dass die Gasgenerator-Längsachse und die Gassack-Längsebene im Wesentlichen senkrecht zueinander verlaufen, bedeutet, dass nicht zwangsläufig ein 90°-Winkel zwischen der Gasgenerator-Längsachse und der Gassack-Längsebene ausgebildet sein muss. Vielmehr kann die Gasgenerator-Längsachse in einem Winkel zwischen 70° und 110°, insbesondere zwischen 80° und 100°, insbesondere zwischen 85°und 95°, zur Gassack-Längsebene ausgebildet sein.

Als Gassack-Längsebene ist die Ebene des Gassacks zu verstehen, die zwischen dem Fahrzeugdach und dem Karosserieboden sowie zwischen dem vorderen und hinteren Ende der Vorhangairbag-Einheit aufgespannt ist.

Im aktivierten Zustand der Vorhangairbag-Einheit, insbesondere im aktivierten Zustand des Gasgenerators, strömt ein mittels des Gasgenerators erzeugtes Gas aus dem Gasgenerator, nämlich aus der mindestens einen Gasauslassöffnung des Gasgenerators, unmittelbar in den Gassack. Ein unmittelbares Strömen des Gases liegt vor, wenn das Gas durch keinen weiteren Gasverteiler und/oder durch kein weiteres Gasgeneratorbauteil und/oder durch kein weiteres Element der Vorhangairbag-Einheit strömt oder strömen muss.

Die Gasausströmrichtung eines aus der mindestens einen Gasauslassöffnung strömenden Gases ist im Wesentlichen parallel zur Gassack-Längsebene ausgebildet oder liegt in der Gassack-Längsebene. Die Gasausströmrichtung wird insbesondere durch den Mittelpunkt der Gasauslassöffnung und deren senkrechten Verlängerung zum Gehäuse des Gasgenerators bzw. zum Gehäuse-Endabschnitt definiert. Dies bewirkt, dass das Gas ohne Umlenkung in alle Bereiche des Gassacks strömen kann, so dass die Gasaufblaszeit beschleunigt wird.

Der Gasgenerator weist vorzugsweise ein länglich zylindrisches Gehäuse auf. Die Gasgenerator-Längsachse verläuft mittig des länglich zylindrischen Gehäuses. Ein derartiges länglich zylindrisches Gehäuse ist bei Vorhangairbag-Einheiten notwendig um die große Menge an Gas zur Füllung des großdimensionierten aufblasbaren Gassacks erzeugen zu können.

In einer bevorzugten Ausführungsform der Erfindung sind mehrere Gasauslassöffnungen, insbesondere rotationssymmetrisch, auf einer die Gasgenerator-Längsachse umlaufenden Kreislinie auf einer Gehäusefläche des Gehäuse-Endabschnitts ausgebildet. Der Gehäuse-Endabschnitt weist mit anderen Worten vorzugsweise mehrere Gasauslassöffnungen auf, die beispielsweise den Diffusor eines Gasgenerators bilden.

Die umlaufende Kreislinie, auf der die mehreren Gasauslassöffnungen ausgebildet sind, liegt vorzugsweise in einer Ebene, die im Wesentlichen parallel zur Gassack-Längsebene ausgebildet ist oder im Wesentlichen der Gassack-Längsebene entspricht. Mit anderen Worten kann die Ebene, in der die Kreislinie liegt mit der Gassack-Längsebene zusammenfallen. Als im Wesentlichen zur Gassack-Längsebene parallel ausgebildete Ebene ist eine derartige Ebene zu verstehen, die lediglich in geringem Maße, d.h. lediglich in einem Winkelbereich von 0° bis 10°, insbesondere von 0° bis 5°, insbesondere von 0° bis 2° von der Gassack-Längsebene abweicht. Wichtig ist, dass zumindest eine angedeutete Parallelität zur Gassack-Längsebene zu erkennen ist oder zu erkennen ist, dass die Ebene in der die Kreislinie liegt, hauptsächlich der Gassack-Längsebene entspricht.

Gemäß der Erfindung verlaufen die Gasgenerator-Längsachse und die Gassack-Längsebene im Wesentlichen derart senkrecht zueinander, dass im aktivierten Zustand der Vorhangairbag-Einheit erzeugtes Gas aus der mindestens einen Gasauslassöffnung umlenkungsfrei in den Gassack strömt. D.h., dass das erzeugte Gas aus der Gasauslassöffnung ausströmt und nicht gegen Abschnitte des Gassacks bzw. der Vorhangairbag-Einheit prallt und abgelenkt wird sondern direkt in die einzelnen Abschnitte des Gassack-Inneren strömt.

Vorzugsweise ist der Gehäuse-Endabschnitt des Gasgenerators zumindest abschnittsweise im Inneren des Gassacks angeordnet. Mit Hilfe einer derartigen Anordnung kann es gemäß einer ersten Alternative ermöglicht werden, dass das aus mindestens einer Gasauslassöffnung ausströmende Gas umlenkungsfrei in den Gassack strömt.

Der Gehäuse-Endabschnitt kann zumindest abschnittsweise in einem Aufnahmeabschnitt, der vorzugsweise eine Öffnung des Gassacks im Bereich einer oberen Abschlusskante des Gassacks schließt, angeordnet sein. Als Aufnahmeabschnitt ist ein derartiger Abschnitt des Gassacks zu verstehen, der den Gehäuse-Endabschnitt aufnimmt. Die Öffnung des Gassacks ist vorzugsweise derart ausgebildet, dass der Gasgenerator, insbesondere der Gehäuse-Endabschnitt in den Aufnahmeabschnitt eingeführt werden kann.

Vorzugsweise ist der Aufnahmeabschnitt aus einem Gassack-Material gebildet. Hierbei kann es sich um Textilmaterial handeln.

In einer weiteren Ausführungsform der Erfindung kann der Gasgenerator zumindest abschnittsweise, vorzugsweise vollständig, oberhalb einer oberen Abschlusskante des Gassacks angeordnet sein. Als obere Abschlusskante des Gassacks ist die Kante des Gassacks zu verstehen, die in einem im Fahrzeug eingebauten Zustand am nächsten zum Fahrzeugdach bzw. maximalst entfernt vom Fahrzeugboden angeordnet ist. Sofern die Vorhangairbag-Einheit einen Aufnahmeabschnitt umfasst, ist die Kante dieses Aufnahmeabschnitts nicht zum Gassack zugehörig zu verstehen.

Sofern der Gehäuse-Endabschnitt in einem Aufnahmeabschnitt angeordnet ist und zusätzlich zumindest abschnittsweise oberhalb einer oberen Abschlusskante des Gassacks angeordnet ist, kann das im Gasgenerator erzeugte Gas ausgehend von der Abschlusskante des Gassacks in mehrere Bereiche des Gassacks, insbesondere gleichmäßig, strömen. Dies ermöglicht ein besonders schnelles Aufblasverhalten des Gassacks.

In einer Ausführungsform der Erfindung ist es möglich, dass beispielsweise lediglich eine obere Hälfte des Gasgenerators, insbesondere lediglich eine obere Hälfte des Gehäuse-Endabschnitts, oberhalb einer oberen Abschlusskante des Gassacks angeordnet ist. Die untere Hälfte des Gasgenerators, insbesondere die untere Hälfte des Gehäuse-Endabschnitts kann mindestens eine Gasauslassöffnung aufweisen, die aufgrund der Anordnung des Gasgenerators relativ nahe an der oberen Abschlusskante des Gassacks ausgebildet ist und demnach ein schnelles Aufblasverhalten des Gassacks hervorruft.

Vorzugsweise weist der Gassack mehrere Gaskammern auf, die über eine im Bereich einer/der oberen Abschlusskante des Gassacks ausgebildete Verbindungskammer mit Gas befüllbar sind. Die Verbindungskammer ist vorzugsweise als längliche Gaskammer ausgebildet. Die Verbindungskammer erstreckt sich vorzugsweise über die gesamte Länge des Gassacks. Die einzelnen Gassackkammern schließen sich in vertikaler Erstreckung des Gassacks an die Verbindungskammer an. Aufgrund des Ausbildens einer Verbindungskammer kann das erzeugte Gas ausgehend von dem Gasgenerator, insbesondere ausgehend von mindestens einer Gasauslassöffnung in alle Bereiche der Verbindungskammer strömen, so dass die Gaskammern ausgehend von der Verbindungskammer gleichmäßig mit Gas befüllt werden.

Vorzugsweise weist der aufblasbare Gassack der Vorhangairbag-Einheit eine derartige Länge auf, dass im aktivierten Zustand der Vorhangairbag-Einheit alle Seitenscheiben eines Fahrzeugs mit dem aufgeblasenen oder entfalteten Gassack überdeckt sind.

Vorzugsweise ist der Gasgenerator in einem hinsichtlich der Längserstreckung des Gassacks mittleren Bereich des Gassacks angeordnet.

Ein nebengeordneter Aspekt der Erfindung betrifft ein Fahrzeug mit einer erfindungsgemäßen Vorhangairbag-Einheit. Es ergeben sich ähnliche Vorteile, wie diese bereits im Zusammenhang mit der erfindungsgemäßen Vorhangairbag-Einheit angegeben sind.

Das erfindungsgemäße Fahrzeug umfasst demnach einen aufblasbaren Gassack mit einer Gassack-Längsebene sowie einen Gasgenerator mit einer Gasgenerator-Längsachse, wobei der Gassack und der Gasgenerator gemäß vorherigen Erläuterungen zueinander angeordnet sind.

Der Gasgenerator ist senkrecht zur Fahrzeug-Längsachse am Fahrzeug, insbesondere am Fahrzeugdach, angeordnet, insbesondere befestigt. Der Gasgenerator ist vorzugsweise derart in Relation zum Fahrzeug angeordnet, dass die Gasgenerator-Längsachse senkrecht zur Fahrzeug-Längsachse verläuft. Der Gasgenerator kann beispielsweise mit Hilfe von Halteblechen an der Fahrzeugkarosserie befestigt, insbesondere daran angeschweißt, sein.

Der Gassack weist vorzugsweise eine derartige Länge auf, dass im aktivierten Zustand der Vorhangairbag-Einheit alle Seitenscheiben des Fahrzeugs mit dem aufgeblasenen oder entfalteten Gassack überdeckt sind.

Die Erfindung wird im Folgenden anhand von Ausführungsbeispielen unter Bezugnahme auf die beigefügten, schematischen Zeichnungen näher erläutert.

Darin zeigen
Figur 1: eine Vorhangairbag-Einheit gemäß dem Stand der Technik;
Figur 2: eine erfindungsgemäße Vorhangairbag-Einheit; und
Figuren 3a - 3c: verschiedene Schnittdarstellungen der erfindungsgemäßen Vorhangairbag-Einheit gemäß der in Figur 3a angegebenen Schnitte.

Im Folgenden werden für gleiche und gleichwirkende Teile dieselben Bezugsziffern verwendet.

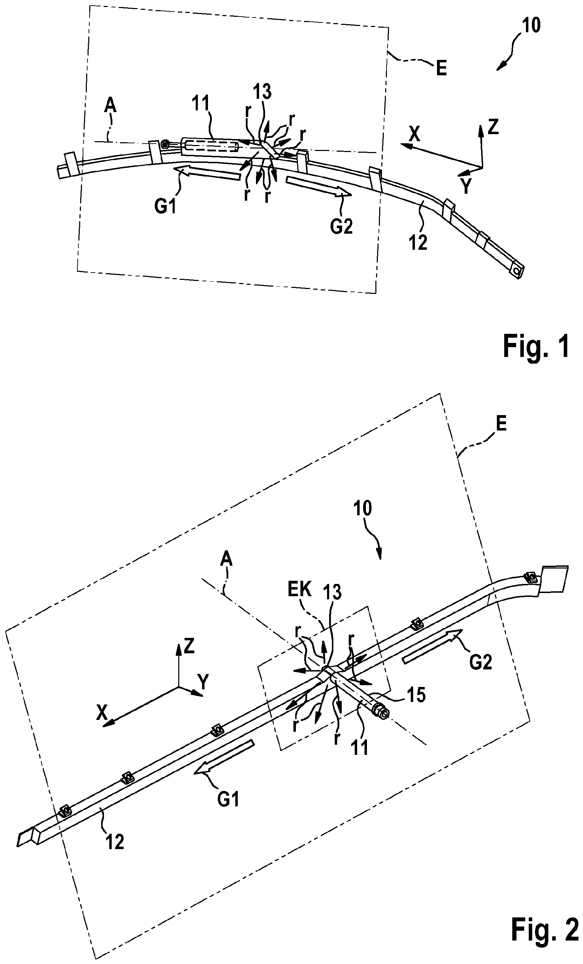

In Figur 1 ist eine Vorhangairbag-Einheit 10 gemäß bekanntem Stand der Technik abgebildet. Diese umfasst einen Gasgenerator 11 sowie einen aufblasbaren Gassack 12. Der Gasgenerator weist eine Gasgenerator-Längsachse A auf. Der aufblasbare Gassack 12 weist eine Gassack-Längsebene E auf. Gemäß abgebildetem Koordinatensystem verläuft diese Gassack-Längsebene E in der XZ-Ebene. Der Gasgenerator 11 ist parallel zur Gassack-Längsebene E ausgebildet.

Die kleinen Pfeile stellen die Ausströmrichtungen r einzelner (nicht dargestellter) Gasauslassöffnungen des Gasgenerators 11 dar. Die Gasauslassöffnungen sind auf einem Gehäuse-Endabschnitt 13 auf einer die Gasgenerator-Längsachse A umlaufenden Kreislinie am Gehäuse-Endabschnitt 13 ausgebildet.

Aufgrund der Anordnung des Gasgenerators 11 und der Ausströmrichtungen r muss das erzeugte Gas, um in die Richtungen G1 und G2 strömen zu können jeweils im Gassack um 90° umgelenkt werden. Sofern das Gas in Richtung G1 strömt wird dieses hinsichtlich der Gasgenerator-Längsachse A um 180° umgelenkt. Daher weisen die Vorhangairbag-Einheiten 10 gemäß Stand der Technik ein unbefriedigendes Aufblasverhalten sowie lange Aufblaszeiten auf.

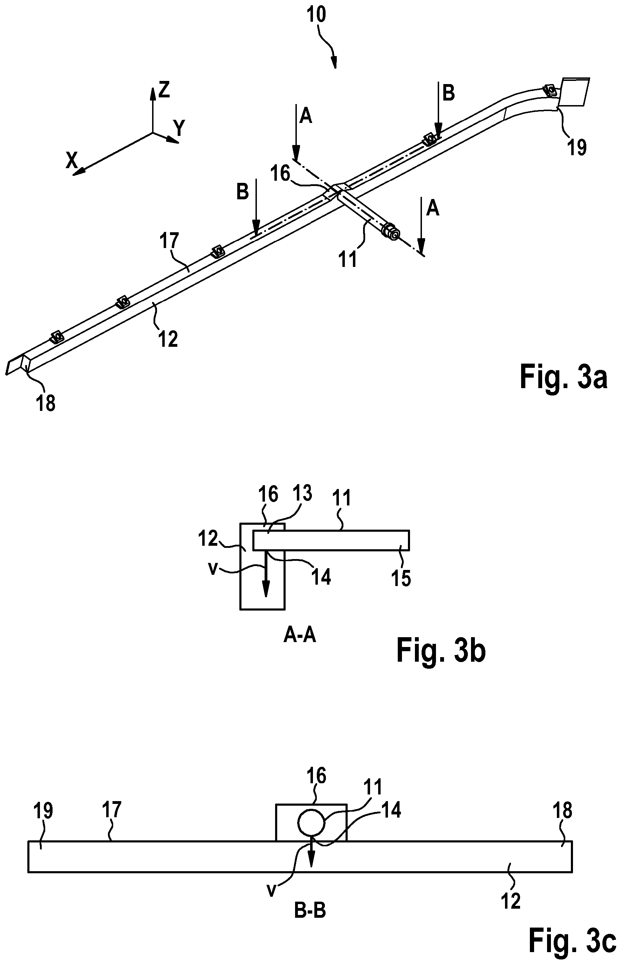

Figur 2 zeigt eine erfindungsgemäße Vorhangairbag-Einheit 10. Diese umfasst einen aufblasbaren Gassack 12 mit einer Gassack-Längsebene E und einem Gasgenerator 11 mit einer Gasgenerator-Längsachse A. Der Gasgenerator 11 weist des Weiteren einen Gehäuse-Endabschnitt 13 auf. Erfindungsgemäß ist der Gasgenerator 11 derart in Relation zum Gassack 12 angeordnet, dass die Gasgenerator-Längsachse A und die Gassack-Längsebene E im Wesentlichen senkrecht zueinander verlaufen. Im aktivierten Zustand der Vorhangairbag-Einheit 10 strömt erzeugtes Gas aus mindestens einer Gasauslassöffnung 14 (siehe Detail gemäß Figuren 3b und 3c) unmittelbar in den Gassack 12. D.h., dass das erzeugte Gas durch keine weiteren Bauteile und/oder Abschnitte des Gassacks 12 strömen muss. Das dargestellte Strömungsverhalten ist auch als umlenkungsfreies Strömungsverhalten zu bezeichnen, da keine Ablenkung innerhalb des Gassacks 12 erfolgt. Das ausströmende Gas strömt in den dargestellten Ausströmrichtungen r direkt und umlenkungsfrei in die Richtungen G1 und G2.

Der dargestellte Gasgenerator 11 weist ein länglich zylindrisches Gehäuse 15 auf. Dieses Gehäuse 15 ist vorzugsweise am Fahrzeugdach montiert.

Es zeigt sich, dass die Ausströmrichtungen r im Wesentlichen parallel zur Gassack-Längsebene E ausgebildet sind. Im dargestellten Beispiel liegen die Gasausströmrichtungen r sogar in der Gassack-Längsebene E. Dies beeinflusst das Aufblasverhalten des Gassacks positiv.

Der dargestellte Gasgenerator 11 weist, wie dies mit den Ausströmrichtungen r angedeutet ist, mehrere Gasauslassöffnungen 14 auf, die auf einer die Gasgenerator-Längsachse A umlaufenden Kreislinie auf der Gehäusefläche des Gehäuse-Endabschnitt 13 ausgebildet sind. Die Kreislinie liegt in einer Ebene EK, die im Wesentlichen parallel, d.h. mit geringfügigen Abweichungen zur Gassack-Längsebene E ausgebildet ist. Da die Ausströmrichtungen r in der Gassack-Längsebene liegen, entspricht auch die Ebene EK der Kreislinie der Gassack-Längsebene E.

In Figur 3a sind die Schnitte A-A und B-B angedeutet.

Wie aus Figur 3 hervorgeht ist der Gasgenerator 11 in einem mittleren Bereich in Relation zum Gassack 12 angeordnet. Mit anderen Worten ist der Gasgenerator 11 sowohl vom vorderen Ende 18 des Gassacks 12 als auch vom hinteren Ende 19 des Gassacks 12 beabstandet angeordnet.

Figur 3b zeigt einen Schnitt durch die erfindungsgemäße Vorhangairbag-Einheit 10 gemäß Schnitt A-A. In Figur 3c wird der Schnitt B-B dargestellt. Der Gehäuse-Endabschnitt 13 ist in einem Aufnahmeabschnitt 16 angeordnet. Der Aufnahmeabschnitt 16 schließt eine Öffnung des Gassacks 12 im Bereich der oberen Abschlusskante 17. Die obere Abschlusskante 17 stellt den oberen Abschluss des Gassacks 12 dar. Der Aufnahmeabschnitt 16 ist aus einem Gassack-Material gebildet und nimmt den Gehäuse-Endabschnitt 13 auf. Der Gasgenerator 11 ist oberhalb der oberen Abschlusskante 17 des Gassacks 12 angeordnet, wobei der Aufnahmeabschnitt 16 nicht zum Gassack 12 hinzugehörig zu interpretieren ist.

Da der Gehäuse-Endabschnitt 13 bzw. der Gasgenerator 11 oberhalb der oberen Abschlusskante 17 ausgebildet ist, kann das aus einer Gasauslassöffnung 14 strömende Gas in vertikaler Richtung V ausströmen. Dadurch kann der Gassack 12 besonders schnell aufgeblasen werden, da das Gas nicht umgeleitet werden muss. Vorzugsweise wird zunächst eine Verbindungskammer (nicht dargestellt) des Gassacks 12 mit Gas gefüllt, so dass weitere Gassackkammern mit Hilfe der Verbindungskammer mit Gas befüllt werden können. Im Wesentlichen ist die Strömungsrichtung parallel zu den Seitenscheiben eines Fahrzeugs.

### Bezuaszeichenliste

- 10: Vorhangairbag-Einheit
- 11: Gasgenerator
- 12: Gassack
- 13: Gehäuse-Endabschnitt
- 14: Gasauslassöffnung
- 15: Gehäuse
- 16: Aufnahmeabschnitt
- 17: obere Abschlusskante
- 18: vorderes Ende Gassack
- 19: hinteres Ende Gassack

- A: Gasgenerator-Längsachse
- E: Gassack-Längsebene
- EK: Ebene Kreislinie
- r: Ausströmrichtung
- G1, G2: Gasströmrichtung
- v: vertikale Ausströmrichtung

## Patentansprüche

1. Vorhangairbag-Einheit (10) mit
einem aufblasbaren Gassack (12) mit einer Gassack-Längsebene (E), und
einem Gasgenerator (11) mit einer Gasgenerator-Längsachse (A) und einem Gehäuse-Endabschnitt (13), der mindestens eine Gasauslassöffnung (14) aufweist,
wobei der Gasgenerator (11) derart in Relation zum Gassack (12) angeordnet ist, dass die Gasgenerator-Längsachse (A) und die Gassack-Längsebene (E) im Wesentlichen senkrecht zueinander verlaufen, und im aktivierten Zustand der Vorhangairbag-Einheit (10) erzeugtes Gas aus der mindestens einen Gasauslassöffnung (14) vom Gasgenerator (11) in den Gassack (12) strömen kann,
**dadurch gekennzeichnet, dass** der Gasgenerator (11) und der Gassack (12) so angeordnet sind, dass im aktivierten Zustand der Vorhangairbag-Einheit (10) erzeugtes Gas aus der mindestens einen Gasauslassöffnung (14) unmittelbar und umlenkungsfrei in den Gassack (12) strömen kann.

2. Vorhangairbag-Einheit (10) nach Anspruch 1, **dadurch gekennzeichnet, dass** die Gasausströmrichtung (r) eines aus der mindestens einen Gasauslassöffnung (14) strömenden Gases im Wesentlichen parallel zur Gassack-Längsebene (E) ausgebildet ist oder in der Gassack-Längsebene (E) liegt.

3. Vorhangairbag-Einheit (10) nach Anspruch 1 oder 2, **dadurch gekennzeichnet, dass** der Gasgenerator (11) ein länglich zylindrisches Gehäuse (15) aufweist.

4. Vorhangairbag-Einheit (10) nach einem der Ansprüche 1 bis 3, **dadurch gekennzeichnet, dass** mehrere Gasauslassöffnungen (14), insbesondere rotationssymmetrisch, auf einer die Gasgenerator-Längsachse (A) umlaufenden Kreislinie auf einer Gehäusefläche des Gehäuse-Endabschnitts (13) ausgebildet sind.

5. Vorhangairbag-Einheit (10) nach Anspruch 4, **dadurch gekennzeichnet, dass** die Kreislinie in einer Ebene (EK) liegt, die im Wesentlichen parallel zur Gassack-Längsebene (E) ausgebildet ist oder im Wesentlichen der Gassack-Längsebene (E) entspricht.

6. Vorhangairbag-Einheit (10) nach einem der vorhergehenden Ansprüche, **dadurch gekennzeichnet, dass** der Gehäuse-Endabschnitt (13) zumindest abschnittsweise im Inneren des Gassacks (12) angeordnet ist.

7. Vorhangairbag-Einheit (10) nach einem der vorhergehenden Ansprüche, **dadurch gekennzeichnet, dass** der Gehäuse-Endabschnitt (13) zumindest abschnittsweise in einem Aufnahmeabschnitt (16), der vorzugsweise eine Öffnung des Gassacks (12) im Bereich einer oberen Abschlusskante (17) des Gassacks (12) schließt, angeordnet ist.

8. Vorhangairbag-Einheit (10) nach Anspruch 7, **dadurch gekennzeichnet, dass** der Aufnahmeabschnitt (15) aus einem Gassack-Material gebildet ist.

9. Vorhangairbag-Einheit (10) nach einem der vorhergehenden Ansprüche, **dadurch gekennzeichnet, dass** der Gasgenerator (11) zumindest abschnittsweise, vorzugsweise vollständig, oberhalb einer oberen Abschlusskante (17) des Gassacks (12) angeordnet ist.

10. Vorhangairbag-Einheit (10) nach einem der vorhergehenden Ansprüche, insbesondere nach Anspruch 10, **dadurch gekennzeichnet, dass** der Gassack (12) mehrere Gassackkammern aufweist, die über einen im Bereich einer/der oberen Abschlusskante (17) des Gassacks (12) ausgebildeten Verbindungskammer mit Gas befüllbar sind.

11. Fahrzeug mit einer Vorhangairbag-Einheit (10) nach einem der Ansprüche 1 bis 10.

12. Fahrzeug nach Anspruch 11, **dadurch gekennzeichnet, dass** der Gasgenerator (11) senkrecht zur Fahrzeug-Längsachse am Fahrzeug, insbesondere am Fahrzeugdach, angeordnet, insbesondere befestigt, ist.

13. Fahrzeug nach Anspruch 11 oder 12, **dadurch gekennzeichnet, dass** der Gassack (12) eine derartige Länge aufweist, dass im aktivierten Zustand der Vorhangairbag-Einheit (10) alle Seitenscheiben des Fahrzeugs mit dem aufgeblasenen Gassack (12) überdeckt sind.

## Claims

1. A curtain airbag unit (10) comprising
an inflatable airbag (12) with a longitudinal airbag plane (E), and
a gas generator (11) having a longitudinal gas generator axis (A) and a housing end portion (13) having at least one gas outlet orifice (14),
wherein the gas generator (11) is arranged relative to the airbag (12) such that the longitudinal gas generator axis (A) and the longitudinal airbag plane (E) extend substantially perpendicularly to each other and gas generated in the activated state of the curtain airbag unit (10) may flow out of the at least one gas outlet orifice (14) from the gas generator (11) into the airbag (12),
**characterized in that** the gas generator (11) and the airbag (12) are arranged such that gas generated in the activated state of the curtain airbag unit (10) can flow out of the at least one gas outlet orifice (14) directly and without being deflected into the airbag (12).

2. The curtain airbag unit (10) according to claim 1, **characterized in that** the gas discharge direction (r) of a gas flowing out of the at least one gas oultet orifice (14) is formed substantially in parallel to the longitudinal airbag plane (E) or is located in the longitudinal airbag plane (E).

3. The curtain airbag unit (10) according to claim 1 or 2, **characterized in that** the gas generator (11) includes an elongate cylindrical housing (15).

4. The curtain airbag unit (10) according to any one of the claims 1 to 3, **characterized in that** a plurality of gas outlet orifices (14) are formed, especially in a rotationally symmectrical manner, on a circular line orbiting the longitudinal gas generator axis (A) on a housing surface of the housing end portion (13).

5. The curtain airbag unit (10) according to claim 4, **characterized in that** the circular line is located in a plane (EK) which is formed substantially in parallel to the longitudinal airbag plane (E) or substantially corresponds to the longitudinal airbag plane (E).

6. The curtain airbag unit (10) according to any one of the preceding claims, **characterized in that** the housing end portion (13) is arranged at least in portions in the interior of the airbag (12).

7. The curtain airbag unit (10) according to any one of the preceding claims, **characterized in that** the housing end portion (13) is arranged at least in portions in a receiving portion (16) which preferably closes an opening of the airbag (12) in the area of an upper closing edge (17) of the airbag (12).

8. The curtain airbag unit (10) according to claim 7, **characterized in that** the receiving portion (15) is made of an airbag material.

9. The curtain airbag unit (10) according to any one of the preceding claims, **characterized in that** the gas generator (11) is arranged at least in portions, preferably completely, above an upper closing edge (17) of the airbag (12).

10. The curtain airbag unit (10) according to any one of the preceding claims, in particular according to claim 9, **characterized in that** the airbag (12) includes a plurality of airbag chambers which can be filled with gas via a connecting chamber formed in the area of an/the upper closing edge (17) of the airbag (12).

11. A vehicle comprising a curtain airbag unit (10) according to any one of the claims 1 to 10.

12. The vehicle according to claim 11, **characterized in that** the gas generator (11) is arranged, in particular mounted, perpendicularly to the longitudinal vehicle axis on the vehicle, especially on the vehicle roof.

13. The vehicle according to claim 11 or 12, **characterized in that** the airbag (12) has such length that in the activated state of the curtain airbag unit (10) all side windows of the vehicle are covered by the inflated airbag (12).

## Revendications

1. Unité airbag rideau (10) comportant
un coussin gonflable (12) avec un plan longitudinal de coussin gonflable (E), et
un générateur de gaz (11) avec un axe longitudinal de générateur de gaz (A) et une
partie en extrémité du corps (13) possédant au moins une ouverture de sortie de gaz (14),
pour lequel le générateur de gaz (11) est agencé par rapport au coussin gonflable (12), de sorte que l'axe longitudinal du générateur de gaz (A) et le plan longitudinal du coussin gonflable (E) sont sensiblement perpendiculaires l'un par rapport à l'autre, et pour lequel dans l'état activé de l'airbag rideau (10) du gaz généré peut s'écouler à partir d'au moins une ouverture de sortie de gaz (14) depuis le générateur de gaz (11) dans le coussin gonflable (12),
**caractérisée en ce que** le générateur de gaz (11) et le coussin à gaz (12) sont agencés de telle sorte que, dans l'état activé de l'airbag rideau (10), le gaz généré peut s'écouler par au moins une ouverture de sortie de gaz (14) directement et sans déviation dans le coussin gonflable (12).

2. Unité airbag rideau (10) selon la revendication 1, **caractérisée en ce que** la direction de sortie de gaz (r) d'au moins un orifice de sortie de gaz (14) est formée sensiblement de gaz s'écoulant sensiblement parallèlement au plan longitudinal du coussin gonflable (E) ou se situe dans le plan longitudinal du coussin gonflable (E).

3. Unité airbag rideau (10) selon les revendications 1 ou 2, **caractérisée en ce que** le générateur de gaz (11) présente un corps cylindrique allongé (15).

4. Unité airbag rideau (10) selon l'une des revendications 1 à 3, **caractérisée en ce qu'**une pluralité d'ouvertures de sortie de gaz (14), notamment symétriques en rotation, sur un axe longitudinal du générateur de gaz (A), sont formées s'étendant sur une ligne circulaire à la surface du corps sur une partie en extrémité corps (13).

5. Unité airbag rideau (10) selon la revendication 4, **caractérisée en ce que** la ligne circulaire se situe dans un plan (EK), qui est sensiblement parallèle au plan longitudinal (E) du coussin gonflable ou qui correspond sensiblement au plan longitudinal (E) du coussin gonflable.

6. Unité airbag rideau (10) selon l'une quelconque des revendications précédentes, **caractérisée en ce que** la partie en extrémité du corps (13) est agencé au moins partiellement à l'intérieur du coussin gonflable (12).

7. Unité airbag rideau (10) selon l'une quelconque des revendications précédentes, **caractérisée en ce que** la partie d'extrémité du corps (13) est disposée, au moins partiellement dans une partie réceptrice (16), qui ferme de préférence une ouverture du coussin gonflable (12) dans la région d'un bord frontière supérieur du sac gonflable (12).

8. Unité airbag rideau (10) selon la revendication 7, **caractérisée en ce que** la partie réceptrice (15) est formée d'un matériau de coussin gonflable.

9. Unité airbag rideau (10) selon l'une quelconque des revendications précédentes, **caractérisée en ce que** le générateur de gaz (11) est agencé au moins partiellement, de préférence complètement, au-dessus d'un bord d'une bord frontière supérieur (17) du coussin gonfable (12).

10. Unité airbag rideau (10) selon l'une des revendications précédentes, en particulier selon la revendication 9, **caractérisée en ce que** le coussin gonflable (12) comporte une pluralité de chambres de coussin gonflable, qui peuvent être remplies par du gaz grâce à une chambre de liaison disposée dans la région d'un bord frontière supérieur (17) du coussin gonflable (12).

11. Véhicule avec une unité airbag rideau (10) selon l'une des revendications 1 à 10.

12. Véhicule selon la revendication 11, **caractérisé en ce que** le générateur de gaz (11) est agencé perpendiculairement à l'axe longitudinal du véhicule sur le véhicule, en particulier sur le pavillon du véhicule, en particulier monté fixe.

13. Véhicule selon la revendication 11 ou 12, **caractérisé en ce que** le coussin gonflable (12) a une longueur telle que dans l'état activé de l'unité airbag rideau (10), toutes les vitres latérales sont couvertes par le coussin gonflable gonflé (12).
